# EUROPÄISCHE PATENTSCHRIFT

(11) **EP 2 279 970 B1**
(45) Veröffentlichungstag und Bekanntmachung des Hinweises auf die Patenterteilung: **22.06.2011**
(21) Anmeldenummer: 10169347.1
(22) Anmeldetag: 13.07.2010
(51) Int. Cl.: B65G 27/24

(54) **Verfahren zur Förderung von Siliciumgranulat in einer gekapselten Förderrinne**
Method for conveying silicon granules in an encapsulated conveying channel
Procédé de transport de granulés de silicium dans une goulotte de transport encapsulée

(30) Priorität: 31.07.2009 DE 102009028166
(43) Veröffentlichungstag der Anmeldung: 02.02.2011
(73) Patentinhaber: Wacker Chemie AG, 81737 München (DE)
(72) Erfinder: Baumann, Bernhard, 84547, Emmerting (DE); Ellinger, Norbert, 84389, Postmünster (DE); Forstpointner, Gerhard, 84556, Kastl (DE)
(74) Vertreter: Fränkel, Robert

(56) Entgegenhaltungen:
- EP-A1- 1 043 249
- GB-A- 1 162 989

## Beschreibung

Die Erfindung betrifft ein Verfahren zur Förderung von Siliciumgranulat in einer gekapselten Förderrinne.

Bei der Herstellung von polykristallinem Siliciumgranulat in einem Wirbelschichtreaktor ist es im laufenden Prozess nötig, Siliciummaterial in regelmäßigen Abständen oder kontinuierlich in den Reaktor zu dosieren und an anderer Stelle fertig gewachsenes Granulat aus dem Reaktor zu entnehmen.

Dazu werden in der Produktion meistens einfache Auf-Zu-Armaturen, wie beispielsweise Schieber, eingesetzt. Um eine Kontamination des hochreinen Siliciums auszuschließen werden dabei in der Regel Schieber aus Siliciummaterial verwendet. Nachteilig dabei ist aber der hohe Verschleiß dieser Schieber, der sich aus der Abrassivität von Siliciumgranulat ergibt.
Aus diesem Grund müssen diese Armaturen daher in einem kurzen Zyklus getauscht werden.

Ein weiterer Nachteil dieser Schieber ist die Neigung zum Verblocken. In diesem Fall muss die jeweilige Anlage dabei abgestellt werden um die Verblockung in der Armatur manuell zu beseitigen. Zudem kann durch die einfache Auf-Zu-Steuerung nur eine begrenzte Regelung der Dosier- und Abzugsmenge erreicht werden.

Üblicherweise werden in der Technik zur Förderung von Schüttgütern offene sowie geschlossene Förderrinnen mit einer direkten Einkopplung durch elektrische oder pneumatische Vibrationsmotoren verwendet.

Bei der Herstellung von Siliciumeinkristallen muss die Beladung und das Nachchargieren eines Schmelztiegels mit hochreinem Siliciummaterial aus Reinheitsgründen unter Vakuumatmosphäre durchgeführt werden.

Aus US 5,462,010 ist eine Vorrichtung für eine kontinuierliche Förderung von granularem Polysilicium in den Schmelztiegel bekannt. Die Anordnung besteht aus einem komplexen Zufördersystem bestehend aus einem großen Vorlagebehälter, einem Zwischenbehälter und dem, auf einem Vibrationsantrieb sitzenden Hauptbehälter. Das gesamte System ist in einer gemeinsamen Vakuumkammer eingehaust. Nachteilig an dieser Anordnung ist der aufwändig von außen gesteuerte Vibrationsantrieb, der bedingt durch die nötigen Durchbrüche für elektrische Zuleitungen und Steuerungen Dichtigkeitsverluste im System begünstigt. Durch die hohen Frequenzen, die benötigt werden um das Siliciummaterial zu bewegen ist auch mit einer hohen Abrasivität zu rechnen. Da das hochreine Siliciumgranulat hier mit vielen verschiedenen Materialien in Kontakt kommt (Messsonden, etc.) ist auch mit einer erhöhten Kontamination des Materials zu rechnen.

Aus US 6,609,870 ist ein Verfahren zur Förderung von granularem Silicium mittels einer pneumatischen Vorrichtung bekannt. Das System ist dabei in einem geschlossen System unter Vakuum angebracht. Ziel dieses Systems ist es auch mittels der durchströmenden Luft das Granulat von Staubpartikel zu befreien. Nachteilig an dem System ist jedoch, dass es sich hier um ein offenes System handelt, bei dem konstant ein hochreines Gas als Transfermedium zugegeben werden muss, dass dann während des Transportes mit Staub kontaminiert wird.

Aus EP 1 043 249 A1 ist ein Verfahren zur Förderung von Siliciumbruch gemäss dem Oberbegriff des Anspruchs 1 bekannt.

Bei der Herstellung von Polysiliciumgranulat in einem Wirbelschichtreaktor stellt der Reaktor mit seinen Zugabe- und Abzugsleitungen dagegen ein geschlossenes System dar, dass in der Regel mit einem Auslegungsdruck von bis zu 10 bar Überdruck arbeitet. Aus diesem Grund können bekannte Schwingförderrinnen mit elektrischem oder pneumatischem Vibrationsmotor, die direkt an der Schwingrinne einkoppeln, nicht eingesetzt werden.

Aufgabe der Erfindung war es daher ein neues System und ein Verfahren zur Förderung und Siliciumgranulat bereit zu stellen, bei dem die Vorrichtung ohne direkte äußere Verbindung im Druckraum eingehaust werden kann und bei dem keine großen Vibrationsbewegungen auf das Granulat einwirken um einen Abrieb am Granulat und an den mechanischen Teilen zu verhindern. Weiterhin soll das System wartungsfreundlich außerhalb des Reaktors angebracht werden können, um einen eventuellen Zugriff zu erleichtern.

Gegenstand der Erfindung ist ein Verfahren zur Förderung von granulatförmigen Silicium mittels horizontaler und /oder vertikaler Bewegung der Fördervorrichtung, dadurch gekennzeichnet, dass die Fördervorrichtung nach außen vollständig abgekapselt ist und die Vorwärtsbewegung des Granulats durch eine Taumelbewegung der Fördervorrichtung mittels der Anregung von mindestens einem an der Fördervorrichtung angebrachten Permanentmagneten durch ein elektromagnetisches Feldes erzeugt wird, wobei das elektromagnetische Feld von einer außerhalb des Druckraumes angeordneten Spule an die gekapselte Vorrichtung angelegt wird.

Gegenüber Förderrinnen, die mittels Vibrationsmotoren angeregt werden, erfolgt die Rüttelbewegung des erfindungsgemäßen Verfahrens in der gekapselten Förderrinne durch die Taumelbewegung eines Permanentmagneten, der durch ein externes elektromagnetisches Wechselfeld angeregt wird. Dadurch läßt sich die Fördervorrichtung vollständig in einem Gehäuse nach außen kapseln und benötigt keine Durchführungen für elektrische Zuleitungen oder Druckluftleitungen.

Die Fördervorrichtung für das erfindungsgemäße Verfahren besitzt nach außen mindestens zwei Anschlussmöglichkeiten, vorzugsweise jeweils eine an jeder Seite der Förderrinne als Ein- und Auslass. Diese Anschlüsse sind bevorzugt als Stutzen oder Flanschverbindungen ausgebildet um die Fördervorrichtung druckdicht an eine Rohrleitung, einen Reaktor oder einen Behälter zur Bevorratung von Granulat anzuschließen. Dadurch kann die Vorrichtung beispielsweise als zertifiziertes Druckgerät in einer Wirbelschichtanlage zur Herstellung von Polysilicium eingesetzt werden.

Die Fördervorrichtung kann je nach Auslegung der Bauteile im Vakuum oder mit erhöhtem Druck betrieben werden. Bevorzugt wird das Verfahren bei einem Druck von 0,1 bar bis 100 bar, besonders bevorzugt bei 1 bis 10 bar ausgeführt.

Durch die vollständige Kapselung in einem Gehäuse kann die Fördervorrichtung auch in Anlagen mit hohen Auslegungsdrücken und/ oder hohen Reinheitsansprüchen eingesetzt werden.

Die Förderrinne im Inneren der Fördervorrichtung ist selbst kein druckbeaufschlagtes Bauteil und kann daher in einem für das jeweilige Fördergut geeigneten Werkstoff ausgeführt werden. Dadurch können Werkstoffe für Gehäuse, innenliegende Rinne, Kompensatoren und Magneten gewählt werden, die speziell auf Langlebigkeit ausgelegt sind und die das zu fördernde Produkt nicht oder wenig kontaminieren. Dadurch ist der Wartungsaufwand sehr gering.

Das Gehäuse der gekapselten Förderrinne besteht bevorzugt aus einer metallischen Rohrleitung mit Anschweißstutzen und Flanschverbindung an den Ein- und Ausläufen.

Die Förderrinne innerhalb der gekapselten Vorrichtung ist am Gehäuse beweglich befestigt. Bevorzugt handelt es sich bei der Förderrinne um eine Rohrleitung in Form eines geschlossenen Rohres mit Öffnungen an Ein- und Auslauf, welches an mindestens einem Punkt mit der äußeren Behausung flexibel verbunden ist. Die flexiblen Halterungen können beispielsweise Federn, Gummibänder, bewegliche Haltebänder oder sonstige flexible Einrichtungen darstellen.

Aus Gründen der Produktreinheit sind Ein- und Auslaufstutzen mit Kunststoffinlinern versehen. An einem Ende des Kunststoffrohres ist ein starker Permanentmagnet befestigt. Dieser kann beispielsweise in einer an diesem Rohr befestigten separaten Kammer angeschlossen sein, um eine Kontamination des Innenraums durch den Magneten zu vermeiden. Besonders bevorzugt ist eine Ausführung bei der ein starker zylinderförmiger Permanentmagnet in ein Kunstoffbehältnis eingeschweißt ist, welches am Förderrohr angebracht ist.

Die Bewegungsfreiheit innerhalb der Kammer für den Magneten ist so zu bemessen, daß der Permanentmagnet einerseits Spielraum für seine Taumelbewegung hat, welche die Förderrinne in Schwingung versetzt, andererseits aber keine freie Drehbewegung des Magneten zuläßt.

Die Taumelbewegung des Permanentmagneten wird durch ein externes elektromagnetisches Wechselfeld einer Spule angeregt, dass mit dem Permanentmagneten gekoppelt ist.

Die Achse des Magneten muß senkrecht zur Spulenachse (Achse des elektromagnetischen Feldes) angeordnet sein. Um den Permanentmagneten vor Abrieb durch die permanenten Taumelbewegungen zu schützen, wird dieser vorzugsweise beschichtet oder in einen Mantel aus Edelstahl eingeschweißt.

Als Materialen für den Permanentmagneten können alle technisch verwendbaren Magneten eingesetzt werden. Bevorzugt werden Magneten enthaltend seltene Erden, besonders bevorzugt Samarium-Kobalt Magneten. Die genaue Zusammensetzung der Magneten und deren Magnetkraft sind nicht entscheidend für die Erfindung. Grundsätzlich kann der Permanentmagnet beliebige Formen besitzen, vorzugsweise wird aber eine zylindrische Form eingesetzt.

Bevorzugt kommen Magneten mit einem Größenverhältnis (Höhe zu Durchmesser) von 1,3:1 zum Einsatz.
Die Magnetbehausung, in dem der Permanentmagnet untergebracht ist benötigt ausreichend Freiraum damit sich dieser in einer Taumelbewegung frei bewegen kann und damit eine korrekte Impulsübertragung auf das Förderrohr entsteht. Das Verhältnis des Hohlraumes der Magnetbehausung zum Magnetdurchmesser beträgt bevorzugt 1,2:1 und die bevorzugte Höhe der Magnetkammer zur Magnethöhe 1,2:1.

Der verwendete Permanentmagnet wird bevorzugt stehend eingebaut. Beim Anlegen eines Wechselfeldes versucht sich der Permanentmagnet im Feld zu zentrieren und überträgt bei dieser Drehbewegung Impulse an die Wand der Magnetbehausung und damit an die daran befestigte Förderrinne.

Die Durchsatzmenge von Siliciumgranulat durch die Fördervorrichtung wird als analoge Größe über die Modulation von Amplitude (Spulenstrom) und Frequenz des elektromagnetischen Wechselfeldes der Spule z.B. mittels eines Frequenzumrichters eingestellt. Die Frequenz wird dabei auf die Eigenfrequenz der Förderrinne in der jeweiligen Einbausituation abgestimmt. Durch die Auswahl des entsprechenden Magnetmaterials, die Dimensionierung des Hohlraumdurchmessers, die Neigung der inneren Förderrinne und die Größe des Permanentmagneten können Arbeitsbereiche für unterschiedliche Anwendungensfälle definiert werden.

Zur Anregung des Magneten wird ein einphasiges Magnetfeld verwendet. Bevorzugt wird dabei eine variablen Frequenz von 0,1 bis 1000 Hz, besonders bevorzugt 5 bis 100 Hz. Die Frequenz wird entsprechend den Einbaugegebenheiten auf Resonanz abgestimmt. Zur Abstimmung kann beispielsweise ein Frequenzumrichter eingesetzt werden. Die Frequenz der Taumelbewegung entspricht der Frequenz des Erregerfeldes.

Zur Einstellung der benötigten Durchsatzmenge der Förderrinne kann die Stromamplitude stufenlos geregelt werden. Dies erfolgt bevorzugt in einem Bereich von 0,1 bis 100A, besonders bevorzugt in einem Bereich von 0,1 bis 5 A.
Die Feldstärke ergibt sich aus der eingesetzten Ampere-Windungszahl und variiert mit der für die benötigte Fördermenge eingestellten Stromstärke.

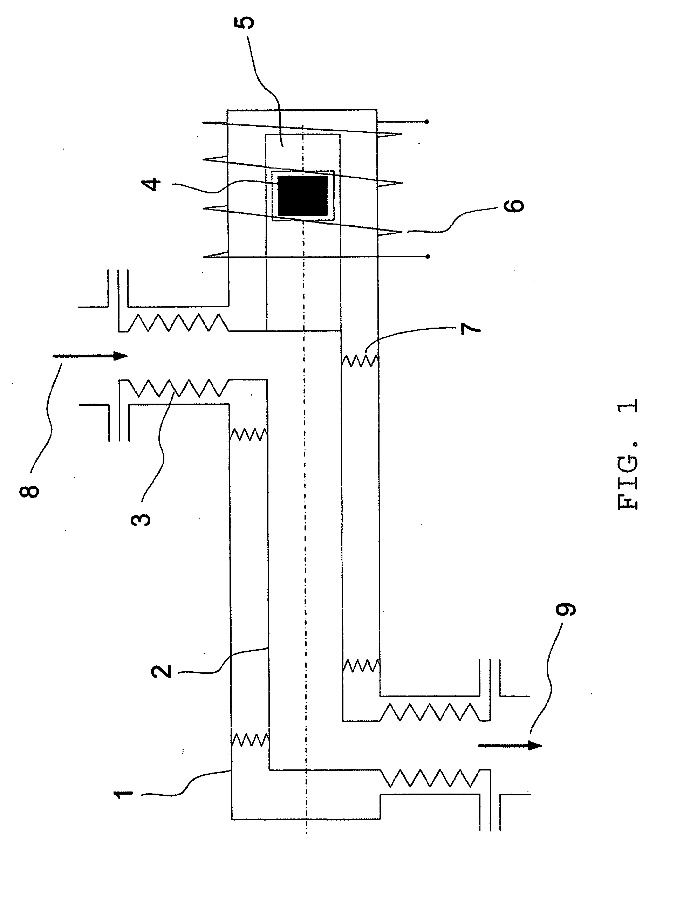

Figur 1 zeigt eine Ausführungsform des erfindungsgemäßen Verfahrens. Die Förderrinne (2) ist druckdicht innerhalb einer Behausung (1) angebracht. Zur flexiblen Verbindung der innen liegenden Förderrinne (2) ist diese am Ein- und Ausgangsflansch mittels eines flexiblen Kompensators (3) verbunden. Die Förderrinne selbst ist innerhalb der Behausung (1) ebenfalls flexibel über mehrere Haltefedern (7) verbunden. An einem Ende der innen liegenden Förderrinne (2) ist eine Behausung (5) für einen Permanentmagneten (4) angebracht. Dieser wird durch ein außen angelegtes Wechselfeld (6) in Bewegung gebracht. Durch die Bewegung der innen liegenden Förderrinne (2) wird das durch die Zuführöffnung (8) eingebrachte Siliciumgranulat bis zur Öffnung für den Produktaustritt (9) vorwärts bewegt.

Es können auch mehrere Ein- und Ausgänge an der Fördervorrichtung angebracht sein, beispielsweise für mehrere Vorlagebehälter oder zur Entnahme kleinerer Granulatmengen zur Beprobung aus deren Förderweg.

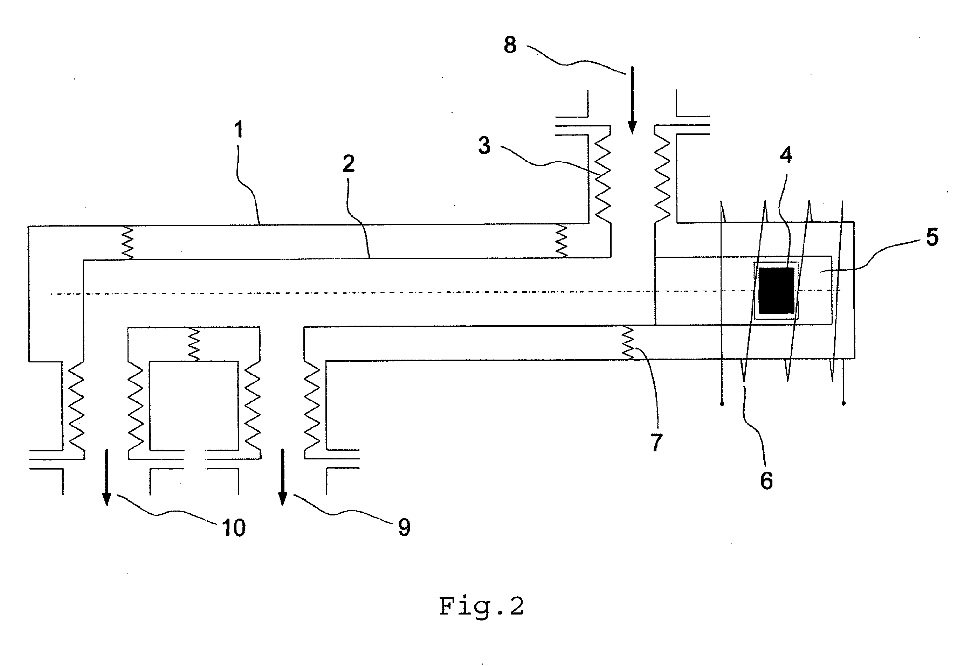

Als eine besondere Ausführungsform des erfindungsgemäßen Verfahrens wird eine gekapselte Fördervorrichtung eingesetzt, bei der eine zusätzliche Vorrichtung für die Entnahme einer Produktprobe möglich ist (Figur 2). Hierbei werden zwei Auslaufstutzen (9 und 10) hintereinander angeordnet. Durch Schließen einer Armatur unterhalb des ersten Auslaufes (9) wird das Fördergut zurückgestaut und blockiert diesen Auslauf. Die Rüttelbewegung der Rinne fördert das Gut weiter zum zweiten Auslauf (10), aus dem es dann in den Probenstrang abfließt. Ein Beenden der Probenahme erfolgt durch das Wiederöffnen der Armatur unter dem ersten Auslauf.

Das erfindungsgemäße Verfahren ist zur Förderung von hochreinem Silicium geeignet, wie beispielsweise solar-grade-silicon für die Herstellung von Solarzellen oder hyper-pure-silicon für die Herstellung von mono- oder multikristallinen Siliciumkristallen für die Elektroindustrie.

Anhand des folgenden Beispiels soll die Erfindung näher erläutert werden.

### Beispiel:

Das erfindungsgemäße Verfahren wurde in einer Förderrinne gemäß Figur 1 ausgeführt. Die Behausung (1) aus Edelstahl hatte einen Durchmesser von 120mm und eine Länge von 1000mm. Das Förderrohr (2) bestand aus einem Kunststoffrohr mit einem Durchmesser von 50mm und einer Länge von 700mm. Die Kunststoff-Behausung für den Permanentmagneten hatte einen Durchmesser von 50mm und eine Länge von 100mm. Zwischen den Ein- und Auslassflansch und dem Förderrohr wurden flexible Kunststoff Kompensatoren (3) angebracht. Die Haltefedern (7) bestanden aus Metall und Kunststoff. Als Flansche wurden Edelstahl Anschweisflansche gewählt um die Vorrichtung mittels DIN Flanschdichtungen abzudichten. Für das externe Erregerfeld wurde eine Spule (6) auf einen Zylinder gewickelt und auf dem Außenrohr in Höhe des Permanentmagneten (4) positioniert. Als Permanentmagnet wurde ein Kobalt-Samarium Magnet mit einem Außendurchmesser von 30mm und einer Länge vom 40mm in einer Edelstahlummantelung eingesetzt. Die Frequenz der Taumelbewegung wurde zwischen 0,1 und 70 Hz variiert. Dabei konnte stufenlos ein Transport des Fördergutes von 0 bis 100 kg/h eingestellt werden.
Bei dem Fördergut handelte es sich um Siliciumgranulat mit hohem Reinheitsgrad (hyper-pure silicon for electronic and solar applications) und einer Korngrößenverteilung von 20µm bis 1000µm und mittleren Korngrößen zwischen 300µm und 500µm.
Am Siliciumgranulat und an der Vorrichtung selbst konnten nach dem Durchlaufen der erfindungsgemäßen Vorrichtung keine Verunreinigung festgestellt werden.

## Patentansprüche

1. Verfahren zur Förderung von granulatförmigen Silicium mittels horizontaler und /oder vertikaler Bewegung der Fördervorrichtung, **dadurch gekennzeichnet, dass** die Fördervorrichtung nach außen vollständig abgekapselt ist und die Vorwärtsbewegung des Granulats durch eine Taumelbewegung der Fördervorrichtung mittels der Anregung von mindestens einem an der Fördervorrichtung angebrachten Permanentmagneten durch ein elektromagnetisches Feld erzeugt wird, wobei das elektromagnetische Feld von außen an die gekapselte Vorrichtung angelegt wird.

2. Verfahren nach Anspruch 1, **dadurch gekennzeichnet, dass** das Verfahren im Vakuum oder bei erhöhtem Druck betrieben wird.

3. Verfahren nach Anspruch 1 bis 2, **dadurch gekennzeichnet, dass** der Permanentmagnet zur Stabilisierung in einer metallischen Hülse gekapselt ist.

4. Verfahren nach Anspruch 1 bis 3, **dadurch gekennzeichnet, dass** die Durchsatzmenge von Siliciumgranulat durch die Fördervorrichtung als analoge Größe über die Modulation von Amplitude (Spulenstrom) und Frequenz des elektromagnetischen Wechselfeldes der Spule eingestellt wird.

5. Verfahren nach Anspruch 4, **dadurch gekennzeichnet, dass** die Modulation mittels eines Frequenzumrichters geschieht.

6. Verfahren nach Anspruch 1 bis 5, **dadurch gekennzeichnet, dass** zur Anregung des Magneten ein einphasiges Magnetfeld mit einer Frequenz von 0,1 bis 1000 Hz verwendet wird.

7. Verfahren nach Anspruch 1 bis 6, **dadurch gekennzeichnet, dass** zur Einstellung der benötigten Durchsatzmenge der Förderrinne die Stromamplitude stufenlos in einem Bereich von 0,1 bis 100A geregelt wird.

8. Verfahren nach Anspruch 1 bis 7, **dadurch gekennzeichnet, dass** an der Fördervorrichtung mehrere Ein- und Ausgänge angebracht sind.

9. Verfahren nach Anspruch 1 bis 8, **dadurch gekennzeichnet, dass** die Fördervorrichtung granulares Silicium in einen Wirbelschichtreaktor dosiert und/oder aus diesem abzieht.

10. Verfahren nach Anspruch 1 bis 8, **dadurch** gekennzeichnt, dass die Fördervorrichtung granulares Silicium in eine Kristallisationsanlage zur Herstellung mono- oder multikristalliner Siliciumkristalle fördert.

11. Verfahren nach Anspruch 1 bis 10 zur Förderung von solar-grade-silicon und/oder hyper-pure-silicon.

## Claims

1. Method for conveying granulated silicon by means of horizontal and/or vertical movement of the conveying device, **characterized in that** the conveying device is completely encapsulated toward the outside and the forward movement of the granules is produced by a swaying movement of the conveying device by means of the excitation of at least one permanent magnet fitted to the conveying device by an electromagnetic field, the electromagnetic field being applied to the encapsulated device externally.

2. Method according to Claim 1, **characterized in that** the method is implemented in a vacuum or at elevated pressure.

3. Method according to Claims 1 to 2, **characterized in that** the permanent magnet is encapsulated in a metallic sleeve for stabilization.

4. Method according to Claims 1 to 3, **characterized in that** the throughput amount of silicon granules through the conveying device is set as an analog variable by way of the modulation of amplitude (coil current) and frequency of the alternating electromagnetic field of the coil.

5. Method according to Claim 4, **characterized in that** the modulation is effected by means of a frequency converter.

6. Method according to Claims 1 to 5, **characterized in that** a single-phase magnetic field having a frequency of 0.1 to 1000 Hz is used for the excitation of the magnet.

7. Method according to Claims 1 to 6, **characterized in that**, for setting the required throughput amount in the conveying channel, the current amplitude is regulated continuously variably in a range of 0.1 to 100 A.

8. Method according to Claims 1 to 7, **characterized in that** a plurality of entrances and exits are fitted to the conveying device.

9. Method according to Claims 1 to 8, **characterized in that** the conveying device meters granular silicon into a fluidized bed reactor and/or extracts it from the latter.

10. Method according to Claims 1 to 8, **characterized in that** the conveying device conveys granular silicon into a crystallization apparatus for producing mono- or multicrystalline silicon crystals.

11. Method according to Claims 1 to 10 for conveying solar-grade silicon and/or hyper-pure silicon.

## Revendications

1. Procédé de transport de silicium granulaire par mouvement horizontal et/ou vertical du dispositif de transport, **caractérisé en ce que** le dispositif de transport est complètement isolé de l'extérieur et le mouvement avant du granulat est généré par un mouvement d'oscillation du dispositif de transport par l'excitation d'au moins un aimant permanent appliqué sur le dispositif de transport par un champ électromagnétique, le champ électromagnétique étant appliqué depuis l'extérieur sur le dispositif encapsulé.

2. Procédé selon la revendication 1, **caractérisé en ce que** le procédé est exploité sous vide ou sous une pression élevée.

3. Procédé selon les revendications 1 et 2, **caractérisé en ce que** l'aimant permanent est encapsulé dans une enveloppe métallique pour la stabilisation.

4. Procédé selon les revendications 1 à 3, **caractérisé en ce que** le débit de granulat de silicium dans le dispositif de transport est ajusté en tant que grandeur analogique par la modulation de l'amplitude (courant induit) et de la fréquence du champ alternatif électromagnétique de la bobine.

5. Procédé selon la revendication 4, **caractérisé en ce que** la modulation s'effectue par un convertisseur de fréquence.

6. Procédé selon les revendications 1 à 5, **caractérisé en ce qu'**un champ magnétique monophasé d'une fréquence de 0,1 à 1 000 Hz est utilisé pour l'excitation de l'aimant.

7. Procédé selon les revendications 1 à 6, **caractérisé en ce que**, pour ajuster le débit nécessaire du conduit de transport, l'amplitude du courant est ajustée en continu dans une plage allant de 0,1 à 100 A.

8. Procédé selon les revendications 1 à 7, **caractérisé en ce que** plusieurs entrées et sorties sont placées dans le dispositif de transport.

9. Procédé selon les revendications 1 à 8, **caractérisé en ce que** le dispositif de transport introduit et/ou extrait du silicium granulaire d'un réacteur à lit fluidisé.

10. Procédé selon les revendications 1 à 8, **caractérisé en ce que** le dispositif de transport transporte du silicium granulaire dans une installation de cristallisation pour la fabrication de cristaux de silicium mono- ou multicristallins.

11. Procédé selon les revendications 1 à 10, pour le transport de silicium de grade solaire et/ou de silicium hyper-pur.
